# EUROPEAN PATENT APPLICATION

(11) **EP 4 614 987 A1**
(43) Date of publication of application: **10.09.2025**
(21) Application number: 24223822.8
(22) Date of filing: 31.12.2024
(51) Int. Cl.: H04N 21/258, H04N 21/41, H04N 21/414, H04N 21/4363

(54) **DISPLAY DEVICE, DISPLAY DEVICE CONNECTION SYSTEM, AND METHOD FOR DISPLAY DEVICE CONNECTION**

(30) Priority: 04.03.2024 TW 113107659
(71) Applicant: Optoma Coporation, New Taipei City 231633 (TW)
(72) Inventor: YANG, Yi-Bin, NEW TAIPEI CITY (TW); CHEN, Hsing-Yu, NEW TAIPEI CITY (TW)
(74) Representative: Ter Meer Steinmeister & Partner

(57) **Abstract**

A display device, a display device connection system, and a method for display device connection are provided. The method includes the following steps. An audio signal including an identifier code is broadcasted by the display device. The audio signal is received by a terminal device to obtain the identifier code. A cloud server is accessed by the terminal device to obtain connection information corresponding to the identifier code. The terminal device is communicatively connected to the display device according to the connection information.

## Description

This application claims priority of TW application serial no. 113107659, filed on March 4, 2024.

### BACKGROUND

### Technical Field

The disclosure relates to a wireless communication technology, and in particular to a display device and a display device connection system that uses wireless communication technology as a method for display device connection.

### Description of Related Art

Currently, there are many technologies for wireless communication products (e.g., wireless projection collaboration technology) that aim to enable display devices within the same space to establish communication connections with each other. Establishing the communication connection between display devices often relies on manual actions by the user. For example, to connect a terminal device held by the user with a display device in the space, the user needs to first activate the wireless local area network function of the terminal device and switch the terminal device to the same wireless local area network as the display device. Next, the terminal device needs to search for the display device within the wireless local area network and then establish a communication connection with the display device. During the process of establishing the communication connection, the user of the terminal device may also need to input authentication information. These steps are not only inconvenient but also pose a risk of exposing the authentication information.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

### SUMMARY

A display device, a display device connection system, and a method for a display device connection are provided to establish a communication connection between a terminal device carried by a user and a display device set up in a space. Other objectives and advantages of the disclosure may be further understood from the technical features disclosed in the disclosure.

The object is solved by the features of the independent claims. Preferred embodiments are given in the dependent claims.

To achieve one, a part, or all of the above objectives, or other objectives, an embodiment of a display device connection system in the disclosure includes a display device, a terminal device, and a cloud server. The cloud server is communicatively connected to the display device and the terminal device. The display device is used to broadcast an audio signal containing an identifier code. The terminal device is used to receive the audio signal to obtain the identifier code and to obtain connection information of the display device corresponding to the identifier code. The connection information is from the cloud server. The terminal device is used to communicatively connect to the display device according to the connection information.

In an embodiment of the disclosure, the display device may transmit hardware feature information and the connection information to the cloud server.

The cloud server may be used to generate the identifier code according to the hardware feature information and to transmit the identifier code to the display device.

In one or more embodiments, the identifier code may correspond to the connection information.

In an embodiment of the disclosure, the hardware feature information may include at least one of a hardware serial number and a media access control address.

In an embodiment of the disclosure, the terminal device may be communicatively connected to an electronic device.

In one or more embodiments, in response to the terminal device obtaining the identifier code of the display device, the terminal device may be disconnected from the electronic device and is communicatively connected to the display device.

In an embodiment of the disclosure, the terminal device may further include a display screen

In one or more embodiments, the display screen may be used to display a prompt screen to inquire about a user's selection.

In an embodiment of the disclosure, in response to the connection information being updated, the display device may transmit the updated connection information to the cloud server.

In an embodiment of the disclosure, the audio signal may include an ultrasonic signal that is supported by sound transmission data technology.

In one or more embodiments, the frequency of the ultrasonic signal may be greater than 20KHz.

In an embodiment of the disclosure, the connection information may include at least one of an Internet Protocol address and a service set identifier.

To achieve one, a part, or all of the above objectives, or other objectives, an embodiment of a method of a display device connection in the disclosure is applicable to a display device connection system including a display device, a terminal device, and a cloud server, wherein the cloud server is communicatively connected to the display device and the terminal device respectively. The method includes the following steps. The display device broadcasts an audio signal including an identifier code. The terminal device receives the audio signal to obtain the identifier code and accessing the cloud server to obtain connection information corresponding to the identifier code. The terminal device is communicatively connected to the display device according to the connection information.

In an embodiment of the disclosure, the display device may transmit the hardware feature information and the connection information to the cloud server.

In one or more embodiments, the cloud server may generate an identifier code according to the hardware feature information and may transmit the identifier code to the display device, wherein the identifier code may correspond to the connection information.

In an embodiment of the disclosure, the hardware feature information may include at least one of a hardware serial number and a media access control address.

In an embodiment of the disclosure, the terminal device may be communicatively connected to an electronic device.

In one or more embodiments, in response to the terminal device obtaining the identifier code of the display device, the terminal device may be disconnected from the electronic device and is communicatively connected to the display device.

In an embodiment of the disclosure, the terminal device may include a display screen.

In one or more embodiments, the display screen may display a prompt screen to inquire about a user's selection.

In an embodiment of the disclosure, in response to the connection information being updated, the display device may transmit the updated connection information to the cloud server.

In an embodiment of the disclosure, the audio signal may include an ultrasonic signal that is supported by sound transmission data technology.

In one or more embodiments, the frequency of the ultrasonic signal may be greater than 20KHz.

In an embodiment of the disclosure, the connection information may include at least one of an Internet Protocol address and a service set identifier.

To achieve one, a part, or all of the above objectives, or other objectives, an embodiment of the display device in the disclosure includes a speaker, a communication device, and a processing device. The processing device is electrically connected to the speaker and the communication device. The processing device transmits the hardware feature information and the connection information via the communication device and is used to receive an identifier code corresponding to the hardware feature information. The processing device broadcasts an audio signal including the identifier code via the speaker. The processing device is communicatively connected to the terminal device via the communication device according to the connection information.

Based on the above, the disclosure enables a terminal device carried by the user to be communicatively connected to a display device in a space, preventing the terminal device from connecting to an incorrect display device (e.g., a device is outside the space).

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

FIG. 1 is a schematic diagram illustrating a display device connection system of an embodiment of the disclosure.
FIG. 2 is a schematic diagram illustrating a method for display device connection of an embodiment of the disclosure.
FIG. 3 is a schematic diagram illustrating a display device in spaces of an embodiment of the disclosure.
FIG. 4 is a flowchart illustrating a method for display device connection of an embodiment of the disclosure.

### DESCRIPTION OF THE EMBODIMENTS

It is to be understood that other embodiment may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings.

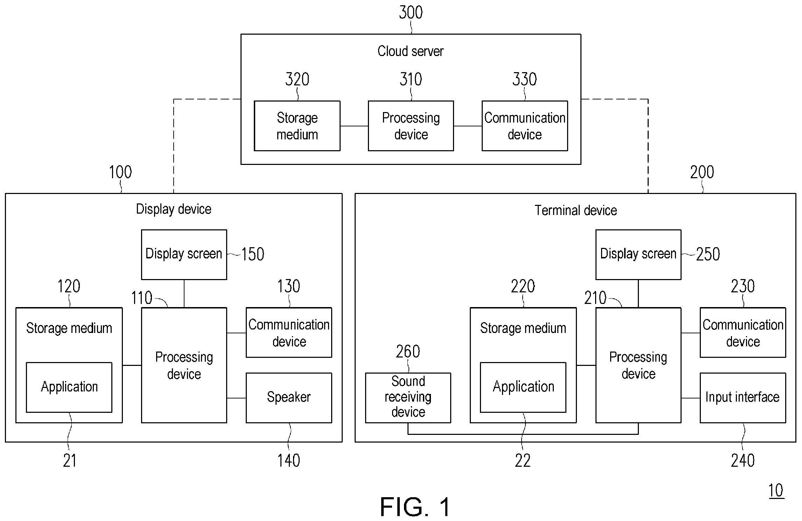

FIG. 1 is a schematic diagram illustrating a display device connection system 10 according to an embodiment of the disclosure, in which the display device connection system 10 may include a display device 100, a terminal device 200, and a cloud server 300. The cloud server 300 may be communicatively connected to the display device 100. The cloud server 300 may be communicatively connected to the terminal device 200. The display device 100 is located in a space. For example, the display device 100 may be located in a conference room or classroom. The display device 100, for example, is a projector or an interactive flat panel (IFP) display with touch functionality. The terminal device 200, for example, is a mobile device carried by the user. The terminal device 200 may be a smartphone, tablet, or laptop computer.

The display device 100 may include a processing device 110, a storage medium 120, a communication device 130, a speaker 140, and a display screen 150.

The processing device 110, for example, includes at least one processor. The processor may be a central processing unit (CPU) or other programmable general-purpose or special-purpose microcontrol unit (MCU), microprocessor, digital signal processor (DSP), programmable controller, application-specific integrated circuit (ASIC), graphics processing unit (GPU), image signal processor (ISP), image processing unit (IPU), arithmetic logic unit (ALU), complex programmable logic device (CPLD), field-programmable gate array (FPGA), or other similar components, or a combination of the above components. The processing device 110 may be electrically connected to the storage medium 120, the communication device 130, the speaker 140, and the display screen 150, respectively, and the processing device 110 may access and execute multiple applications stored in the storage medium 120.

The storage medium 120, for example, may be any type of fixed or removable random access memory (RAM), read-only memory (ROM), flash memory, hard disk drive (HDD), solid-state drive (SSD), or similar components, or a combination of the above components. The storage medium 120 is used to store multiple applications executable by the processing device 110. In this embodiment, the storage medium 120 may store an application 21. The processing device 110 may execute the application 21 to initiate various functions (e.g., connection function) of the display device 100.

The communication device 130 transmits or receives signal wirelessly or via a wired connection. The communication device 130, for example, may be a wireless network circuit or chip, a wired network circuit or chip, or a combination of these circuits or chips. In an embodiment, the communication device 130 may be a circuit or chip supporting Global System for Mobile Communication (GSM), Wireless Fidelity (WiFi), or Bluetooth communication technology, or a combination thereof, but is not limited thereto. The communication device 130 may also have specific circuits or chips for performing operations such as low-noise amplification, impedance matching, mixing, up or down frequency conversion, filtering, amplification, and similar functions. The processing device 110 of the display device 100 may be communicatively connected to the terminal device 200 or the cloud server 300 via the communication device 130.

The terminal device 200 may include a processing device 210, a storage medium 220, a communication device 230, an input interface 240, a display screen 250, and a sound receiving device 260.

The processing device 210 of the terminal device 200 has similar hardware components to the processing device 110 of the display device 100 and will not be redundantly described here. The processing device 210 may be electrically connected to the storage medium 220, the communication device 230, the input interface 240, the display screen 250, and the sound receiving device 260, respectively, and the processing device 210 may access and execute multiple applications stored in the storage medium 220.

The storage medium 220 has similar hardware components to the storage medium 120 of the display device 100 and will not be redundantly described here. The storage medium 220 is used to store multiple applications executable by the processing device 210. In this embodiment, the storage medium 220 may store an application 22. The processing device 210 may execute the application 22 to initiate various functions (e.g., connection function) of the terminal device 200.

The communication device 230 has similar hardware components to the communication device 130 of the display device 100 and will not be redundantly described here. The processing device 210 may be communicatively connected to the display device 100 or the cloud server 300 via the communication device 230.

The processing device 210 may interact with the user via the display screen 250. For example, the processing device 210 may display information (e.g., images) for the user to view on the display screen 250. The input interface 240 may include a keyboard, buttons, or a touch device. The processing device 210 may receive commands from the user via the input interface 240. The sound receiving device 260 may include audio receivers such as a dynamic microphone, condenser microphone, electret condenser microphone, micro-electrical mechanical system (MEMS) microphone, ribbon microphone, or carbon microphone. The sound receiving device 260 receives audio signal broadcasted by the speaker 140, and the processing device 210 may receive the audio signal via the sound receiving device 260.

Furthermore, the display screen 150 of the display device 100 and the display screen 250 of the terminal device 200 have similar hardware components. For example, the display screen 150 and the display screen 250 may be a liquid crystal display panel, LED display panel, micro LED display panel, or OLED display panel. The display screens 150 and 250 are used to display images.

The cloud server 300 may include a processing device 310, a storage medium 320, and a communication device 330.

The processing device 310 has similar hardware components to the processing device 110 of the display device 100, with differences in the quantity of hardware components and the speed and amount of data processing, which will not be redundantly described here. The processing device 310 may be electrically connected to the storage medium 320 and the communication device 330 and may access and execute multiple applications stored in the storage medium 320.

The storage medium 320 has similar hardware components to the storage medium 120 of the display device 100, with the difference being the amount of stored data. The storage medium 320 is used to store multiple applications executable by the processing device 310.

The communication device 330 has similar hardware components to the communication device 130 of the display device 100 and will not be redundantly described here. The processing device 310 may be communicatively connected to the display device 100 or the terminal device 200 via the communication device 330.

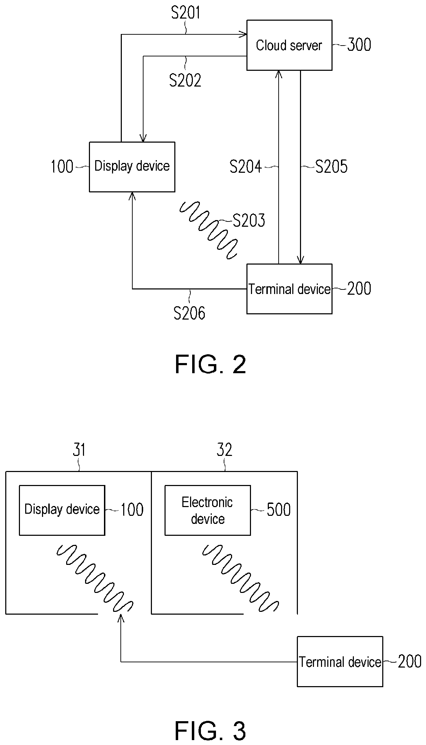

FIG. 2 is a schematic diagram illustrating a method for display device connection according to an embodiment of the disclosure, wherein the method may be implemented by the display device connection system 10 as shown in FIG. 1.

In step S201, the processing device 110 of the display device 100 executes the application 21 to allow the communication device 130 to transmit or upload information of at least one hardware feature and connection information to the cloud server 300 via the Internet. The hardware feature information is hardware information associated with the display device 100; for example, the hardware feature information may at least include a hardware serial number or a media access control (MAC) address of the display device 100. The connection information may include information necessary for connecting to the display device 100, such as an Internet Protocol (IP) address, service set identifier (SSID), or password. For instance, if the display device 100 is connected to other terminal devices via a wireless network provided by a wireless router set up in the space, then the connection information may include the SSID and/or connection password of that wireless router. In another example, if the display device 100 itself has the functionality of a wireless router, then the connection information may include the SSID and/or connection password of the display device 100. The above-mentioned hardware feature information and connection information may be stored in the storage medium 120 of the display device 100.

In an embodiment, when the connection information of the display device 100 is updated, the application 21 executed by the processing device 101 of the display device 100 may transmit the updated connection information to the cloud server 300 in real time or periodically. For example, if the space where the display device 100 is located includes a first wireless router and a second wireless router, and the connection of the display device 100 switches from the first wireless router to the second wireless router, then the application 21 executed by the processing device 101 may update the connection information corresponding to the first wireless router to the connection information corresponding to the second wireless router. The application 21 executed by the processing device 101 may further transmit the updated connection information to the cloud server 300.

After the cloud server 300 receives the hardware feature information and the connection information from the display device 100, in step S202, the processing device 310 of the cloud server 300 may generate an identifier code based on the hardware feature information of the display device 100 and transmit the identifier code to the display device 100 via the communication device 330. The identifier code corresponds to the connection information of the display device 100, meaning that the connection information of the display device 100 may be obtained based on the identifier code. Through the communication device 130, the display device 100 obtains the identifier code corresponding to the hardware feature information of the display device 100. The identifier code is stored in the storage medium 320 of the display device 100. The cloud server 300 may store the identifier code and the connection information of the display device 100 in the storage medium 320; additionally, the hardware feature information of the display device 100 may be also stored in the storage medium 320.

In step S203, in the space, with the display device 100 in an active state, the processing device 110 of the display device 100 controls the speaker 140, and the speaker 140 continuously or periodically broadcasts an audio signal containing the identifier code. At this time, the terminal device 200 operated by the user receives the audio signal containing the identifier code via the sound receiving device 260, and the application 22 executed by the processing device 210 decodes the audio signal to obtain the identifier code. The audio signal may be an ultrasound signal supporting data over sound technology. For example, the processing device 110 of the display device 100 executes the application 21 to encode the identifier code as an audio barcode, the sound receiving device 260 receives the audio signal containing the identifier code (audio barcode), and the application 22 executed by the processing device 210 decodes the audio signal to obtain the identifier code. The frequency of the ultrasound signal may be greater than 20,000 Hz. Ultrasound signal is generally inaudible to humans. Ultrasound signal has low penetration characteristics, meaning they do not easily pass through physical objects, such as walls or partitions. Only terminal devices 200 within the same space as the display device 100 may receive the ultrasound signal and obtain the identifier code corresponding to the display device 100 from the ultrasound signal.

In step S204, the processing device 210 of the terminal device 200 executes the application 22 to establish a communication connection to the cloud server 300 via the Internet or a mobile network and uploads the identifier code to the cloud server 300. The cloud server 300 is used to determine whether there is connection information for the display device 100 corresponding to the identifier code. Specifically, if none exists, the name of the display device 100 will not be displayed on the display screen 250. If it exists, the name of the display device 100 is displayed on the display screen 250. In step S205, if the cloud server 300 confirms the existence of connection information for the display device 100 corresponding to the identifier code, the cloud server 300 transmits the connection information of the display device 100 to the terminal device 200 via the Internet or a mobile network, and the application 22 executed by the processing device 210 may receive the connection information of the display device 100 from the cloud server 300. In step S206, the application 22 executed by the processing device 210 may establish a communication connection to the display device 100 based on the connection information of the display device 100. Specifically, the application 22 executed by the processing device 210 of the terminal device 200 may establish a communication connection with the communication device 130 of the display device 100 via the communication device 230. In one example, both the terminal device 200 and the display device 100 are within the same wireless network domain, allowing the terminal device 200 to control the display device 100 so that the screen displayed on the display screen 250 of the terminal device 200 is projected onto the display screen 150 of the display device 100, making the screen on display screen 250 identical to the screen on display screen 150.

Further explanation: In step S201, the processing device 110 of the display device 100 executes the application 21, enabling the communication device 130 to establish a communication connection with the cloud server 300 via the Internet. The location of the cloud server 300, for example, may be in a nearby space or country relative to the display device 100. For instance, if the location of the display device 100 is in Japan, when the display device 100 is connected to the cloud server 300 via the Internet, it will connect to the cloud server 300 in Taiwan (the cloud server of the specific region) rather than to a cloud server in Europe or the America. The hardware feature information and connection information of the display device 100 are stored in the cloud server 300 in Taiwan. It is worth mentioning that the cloud servers in each region run an information synchronization program at regular intervals to synchronize the data stored on the cloud server in one region with other cloud servers. Therefore, when the user executes the application 22 on the terminal device 200, after logging in with the user's account and password, the terminal device 200 connects to the cloud server 300 via the Internet or a mobile network and uploads the identifier code to the cloud server 300. The cloud server 300 may then identify and provide the connection information of the display device 100 corresponding to the identifier code.

When the user initiates the execution of the application 22 on the terminal device 200 by the processing device 210, after step S205 is completed, a prompt screen is displayed on the display screen 250 of the terminal device 200. For example, a prompt screen stating "Display device 100 detected and available for communication connection. Would you like to connect to display device 100?" appears. The display screen 250 shows the names of at least one display device available for communication connection, allowing the user to select one of the available display devices. When the user selects the display device 100, the terminal device 200 may establish a communication connection with the display device 100.

In an embodiment, after the terminal device 200 completes a communication connection with the display device 100, the application 22 executed by the processing device 210 of the terminal device 200 may disconnect the communication connection between the terminal device 200 and other electronic devices. Taking FIG. 3 as an example, suppose the user is carrying the terminal device 200 within a space 32, and the terminal device 200 is communicatively connected to an electronic device 500. The electronic device 500 in the space 32, for instance, may have the same equipment and functionality as the display device 100. When the user carries the terminal device 200 out of the space 32 and into another space 31, the terminal device 200 receives the audio signal from the display device 100 and obtains the identifier code of the display device 100 from the audio signal. After obtaining the identifier code of the display device 100, the terminal device 200 may disconnect from the electronic device 500 and establish a communication connection with the display device 100 based on the identifier code. Further explanation: when the application 22 executed by the processing device 210 of the terminal device 200 is running, it continuously or periodically receives the audio signal. The application 22 executed by the processing device 210 is used to confirm whether the sound receiving device 260 has received the latest audio signal.

In an embodiment, upon receiving the latest audio signal, the display screen 250 of the terminal device 200 displays the prompt screen as described above. After the user selects the new display device, the terminal device 200 may establish a communication connection with the new display device.

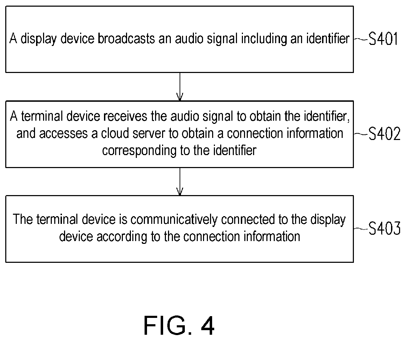

FIG. 4 is a flowchart illustrating a method for display device connection according to an embodiment of the disclosure, wherein the method may be implemented by the display device connection system 10 as shown in FIG. 1. In step S401, a display device broadcasts an audio signal including an identifier code. In step S402, a terminal device receives the audio signal to obtain the identifier code, and accesses a cloud server to obtain connection information corresponding to the identifier code. The connection information is the connection information of the display device. In step S403, the terminal device is communicatively connected to the display device according to the connection information.

In summary, the display device, display device connection system, and display device connection method of embodiments in the disclosure have at least one of the following advantages: a display device set up in a space may broadcast an audio signal containing an identifier code, where the audio signal, for example, includes an ultrasound signal that supports data-over-sound technology and has a low penetration characteristic. Only terminal devices within the same space may receive the identifier code carried by the audio signal. The terminal device may use the identifier code to connect to the cloud server, thereby obtaining the connection information of the display device, which may contain a larger amount of information, through a mobile network or a wireless network. The terminal device may establish a communication connection with the display device based on the connection information. The terminal device carried by the user will only connect to a display device located in the same space. Accordingly, the disclosure improves the communication connection functionality of the terminal device, preventing it from connecting to an incorrect target (e.g., a device locates outside the space) when performing the communication connection function. Additionally, the terminal device may quickly obtain the connection information from the cloud server through a mobile network or wireless network.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of this disclosure is provided to comply with the rules requiring an abstract, which will allow a searcher to quickly ascertain the subject matter of the technical disclosure of any patent issued from the disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A display device connection system, comprising:
a display device (100);
a terminal device (200); and
a cloud server (300), communicatively connected to the display device (100) and the terminal device (200), wherein the display device (100) is configured to broadcast an audio signal comprising an identifier code;
the terminal device (200) is configured to receive the audio signal to obtain the identifier code, and to obtain connection information of the display device (100) corresponding to the identifier code configured,
wherein the connection information is from the cloud server (300), and the terminal device (200) is communicatively connected to the display device (100) according to the connection information.

2. The display device connection system of claim 1, wherein the display device (100) is configured to transmit a hardware feature information and the connection information to the cloud server (300); and the cloud server (300) is configured to generate the identifier code according to the hardware feature information and transmit the identifier code to the display device (100), wherein the identifier code corresponds to the connection information, preferably the hardware feature information comprises at least one of a hardware serial number and a media access control address.

3. The display device connection system according to claim 1 or 2, wherein the terminal device (200) is communicatively connected to an electronic device (500); and in response to the terminal device (200) obtaining the identifier code of the display device (100), the terminal device (200) is communicatively disconnected from the electronic device (500), and the terminal device (200) is communicatively connected to the display device (100).

4. The display device connection system according to any one of the preceding claims, wherein the terminal device (200) further comprises a display screen (250), and the display screen (250) is configured to display a prompt screen to inquire a selection of a user.

5. The display device connection system according to any one of the preceding claims, wherein in response to the connection information being updated, the display device (100) is configured to transmit the updated connection information to the cloud server (300).

6. The display device connection system according to any one of the preceding claims, wherein the audio signal comprises an ultrasonic signal having a frequency greater than 20KHz.

7. The display device connection system according to any one of the preceding claims, wherein the connection information comprises at least one of an Internet Protocol address and a service set identifier.

8. A method of a display device connection, applicable to a display device connection system comprising a display device (100), a terminal device (200), and a cloud server (300), wherein the cloud server (300) is communicatively connected to the display device (100) and the terminal device (200) respectively, the method comprising:
broadcasting (S401) an audio signal comprising an identifier code by the display device (100);
receiving (S402) the audio signal to obtain the identifier code, and accessing the cloud server (300) to obtain connection information corresponding to the identifier code by the terminal device (200); and
communicatively connecting (S403) the terminal device (200) and the display device (100) according to the connection information.

9. The method according to claim 8, further comprising:
transmitting a hardware feature information and the connection information to the cloud server (300) by the display device (100); and
generating the identifier code according to the hardware feature information by the cloud server (300), and transmitting the identifier code to the display device (100), wherein the identifier code corresponds to the connection information.

10. The method according to claim 8 or 9, wherein the hardware feature information comprises at least one of a hardware serial number and a media access control address.

11. The method according to claim 8, 9 or 10, further comprising:
communicatively connecting the terminal device (200) and an electronic device (500); and
in response to the terminal device (200) obtaining the identifier code of the display device (100), disconnecting the terminal device (200) and the electronic device (500), and communicatively connecting the terminal device (200) and the display device (100).

12. The method according to any one of the preceding claims 8-11, further comprising in response to the connection information being updated, transmitting the updated connection information to the cloud server by the display device.

13. The method according to any one of the preceding claims 8-12, wherein the audio signal comprises an ultrasonic signal, wherein a frequency of the ultrasonic signal is greater than 20 KHz.

14. The method according to any one of the preceding claims 8-13, wherein the connection information comprises at least one of an Internet Protocol address and a service set identifier.

15. A display device, comprising:
a speaker (140);
a communication device (130); and
a processing device (110), electrically connected to the speaker (140) and the communication device (130), the processing device (110) is configured to transmit hardware feature information and connection information through the communication device (130), and to receive an identifier code corresponding to the hardware feature information; the processing device (110) is configured to broadcast an audio signal comprising the identifier code through the speaker (140); and the processing device (110) is communicatively connected to a terminal device (200) through the communication device (130) according to the connection information.
